# EUROPÄISCHE PATENTSCHRIFT

(11) **EP 1 762 330 B1**
(45) Veröffentlichungstag und Bekanntmachung des Hinweises auf die Patenterteilung: **23.07.2008**
(21) Anmeldenummer: 05019647.6
(22) Anmeldetag: 09.09.2005
(51) Int. Cl.: B23Q 1/00

(54) **Positionier- und Spannvorrichtung für Werkzeuge und/oder Werkstücke**
Positioning and tensioning device for tools and/or workpieces
Dispositif de positionnement et de blocage pour outils et/ou pièces à travailler

(43) Veröffentlichungstag der Anmeldung: 14.03.2007
(73) Patentinhaber: System 3R Schweiz AG, 9230 Flawil (CH)
(72) Erfinder: Roth, Walter, 9012 St. Gallen (CH)
(74) Vertreter: Weiss, Wolfgang

(56) Entgegenhaltungen:
- EP-A- 1 302 278
- DE-A1- 10 116 229
- DE-A1- 10 117 485
- DE-A1- 19 636 375

## Beschreibung

Die Erfindung bezieht sich auf eine Positionier- und Spannvorrichtung für Werkzeuge und/oder Werkstücke umfassend einen Grundkörper, einen im Grundkörper verschiebbar angeordneten Kolben, einen mit dem Kolben verbindbar angeordneten Zapfen und mindestens ein Verriegelungsmittel zur Verriegelung der Positionier- und Spannvorrichtung gegenüber einem zum Grundkörper komplementär ausgebildeten Werkstück- oder Werkzeughalter, wobei der Grundkörper mit einer Zylinderaufnahme zur Aufnahme des Kolbens ausgebildet ist, wobei zwischen dem Kolben und dem Zapfen ein Klemmkonus angeordnet ist, wobei an dem Klemmkonus und an dem Kolben Steuerflächen ausgebildet sind, wobei am Verriegelungsmittel weitere mit den Steuerflächen des Klemmkonus und des Kolbens zusammenwirkende Steuerflächen ausgebildet sind und wobei das Verriegelungsmittel radial verschiebbar im Grundkörper angeordnet ist.

Im Werkzeugmaschinenbau werden in einem so genannten Bearbeitungszentrum Werkstücke mit computergesteuerten Werkzeugen bearbeitet. Zum genauen Positionieren und Festhalten des Werkstückes in Bezug auf das Werkzeug, oder umgekehrt, werden Schnellspannsysteme verwendet. Mit einem Schnellspannsystem wird erreicht, dass im dreidimensionalen Koordinatensystem, das die Grundlage für die Steuerung durch den Computer bildet, die Position des Werkzeuges oder des Werkstückes reproduzierbar und genau definiert werden kann. Wenn im Verlauf der Bearbeitung des Werkstückes häufig das Werkzeug oder die Bearbeitungsmaschine gewechselt werden muss, muss für die Computersteuerung gewährleistet sein, dass das Werkstück sich immer wieder am gleichen Platz im Koordinatensystem befindet.

Aus der DE 10116229 A1 ist eine gattungsgemässe Vorrichtung zum lösbaren Halten von Werkstücken an Bearbeitungsmaschinen bekannt. In einem Grundkörper ist eine zylindrische Aufnahme für einen dazu passenden Kolben ausgebildet. Der Kolben wird entgegen einer Federkraft von einem hydraulischen oder pneumatischen Medium in der Z-Richtung bewegt. Ein Spannzapfen, der mit einer Palette verbunden wird, ist in einer Kugelhülse beweglich in der Z-Richtung gelagert. In der Kugelhülse sind am Umfang des Spannzapfens mehrere Kugeln radial beweglich angeordnet. Durch besonders ausgebildete Spannflächen am Spannzapfen und am Kolben wird der Spannzapfen durch die Bewegung des Kolbens zentriert und eingespannt.

Aus der EP 1302278 A1 ist eine weitere Vorrichtung zur Verbindung einer Werkstückspalette mit einer komplementär dazu ausgebildete Klemmpalette bekannt. Zwischen zwei Spannvorrichtungen ist ein Zwischenglied mit konischer Aussenfläche angeordnet. Die konische Aussenfläche wirkt zusammen mit weiteren konischen Innenflächen der Spannvorrichtung. In einem Ausführungsbeispiel wird ein Kolben mit konischen Aussenflächen in einem Grundkörper verriegelt von Kugeln, die radial verschiebbar im Grundkörper angeordnet sind.

Ausgehend von diesem Stand der Technik ist es Aufgabe der Erfindung, eine Positionier- und Spannvorrichtung mit einer Genauigkeit im Mikrometerbereich anzugeben, die aus möglichst wenigen Teilen aufgebaut ist, eine lange Lebensdauer und eine möglichst hohe Spann- und Haltekraft gewährleistet.

Diese Aufgabe wird erfindungsgemäss gelöst durch eine Positionier- und Spannvorrichtung für Werkzeuge und/oder Werkstücke nach dem unabhängigen Patentanspruch 1. Bevorzugte Weiterbildungen der Erfindung ergeben sich aus den abhängigen Ansprüchen.

Es ist von Vorteil, dass die Positionier- und Spannvorrichtung eine möglichst hohe Reproduzierbarkeit gewährleistet. Dies wird dadurch erreicht, dass am Aussenumfang des Grundkörpers Z-Auflagen ausgebildet sind. Dies wird auch dadurch erreicht, dass der Grundkörper auf der Aussenseite eine konisch ausgebildete Zentrierfläche aufweist. Dies wird auch dadurch erreicht, dass die konisch ausgebildete Zentrierfläche konzentrisch mit einer zylindrischen Aussenfläche des Grundkörpers ausgebildet ist. Der Grundkörper, der aus einem Stück gefertigt ist, übernimmt alle Funktionen, die für ein präzises Spannen und Zentrieren des Werkstückes notwendig sind.

Es ist auch von Vorteil, dass die Positionier- und Spannvorrichtung leicht gereinigt werden kann. Dies wird dadurch erreicht, dass im Grundkörper benachbart zur Z-Auflage waagrechte und schlitzförmige Ausblasöffnungen ausgebildet sind. Dies wird auch dadurch erreicht, dass zur zylindrischen Aufnahme im Grundkörper Leitungen für die Spülluft ausgebildet sind.

Ein Ausführungsbeispiel der Erfindung wird anhand der Figuren beschrieben. Es zeigen:
Figur 1 einen Schnitt durch eine erfindungsgemässe Positionier- und Spannvorrichtung,
Figur 2 eine perspektivische Sicht auf die Positionier- und Spannvorrichtung von Figur 1,
Figur 3 eine weitere Sicht auf die Positionier- und Spannvorrichtung von Figur 1,
Figur 4a,b eine perspektivische Sicht auf ein Verriegelungsmittel zur Positionier- und Spannvorrichtung von Figur 1,
Figur 5 eine perspektivische Sicht auf einem Kolben zum Verriegelungsmittel von Figur 4,
Figur 6 eine perspektivische Sicht auf einem zur Positionier- und Spannvorrichtung komplementär ausgebildeten Werkstück- oder Werkzeughalter und
Figur 7 eine perspektivische Sicht auf einem weiteren komplementär ausgebildeten Werkstück- oder Werkzeughalter.

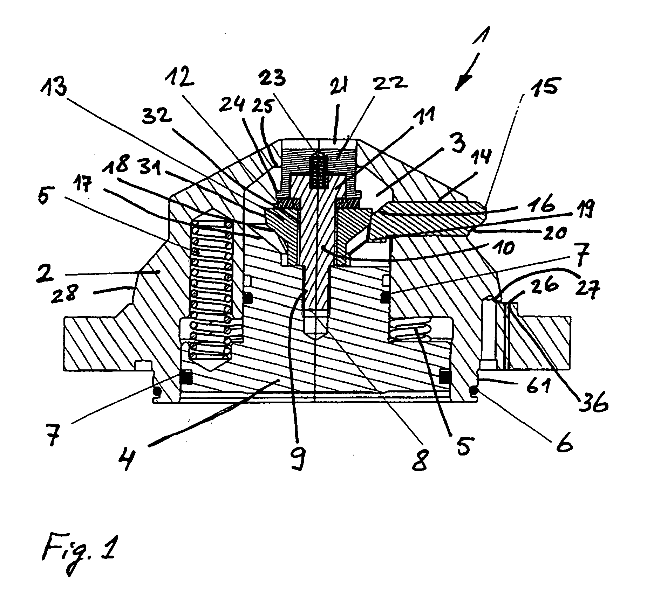

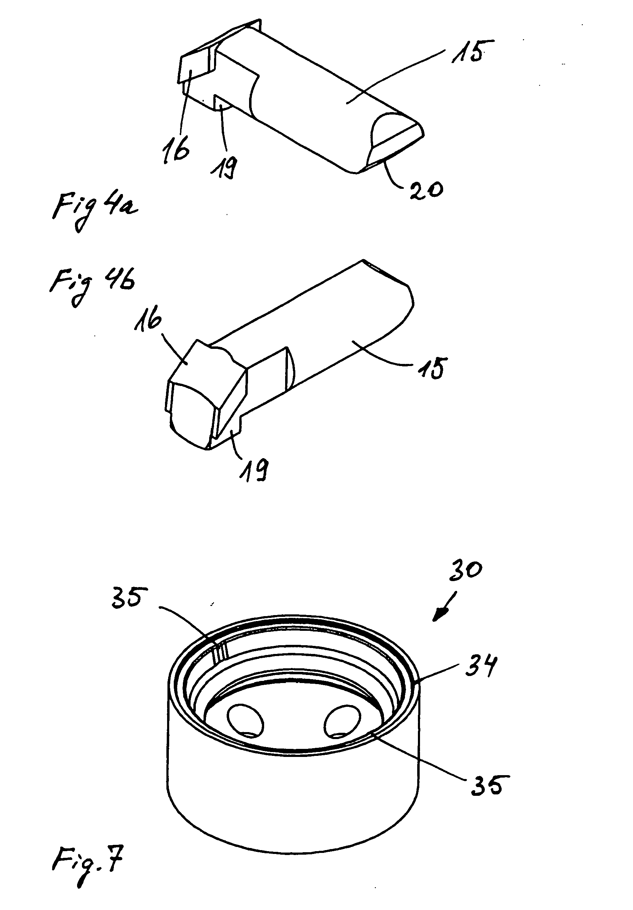

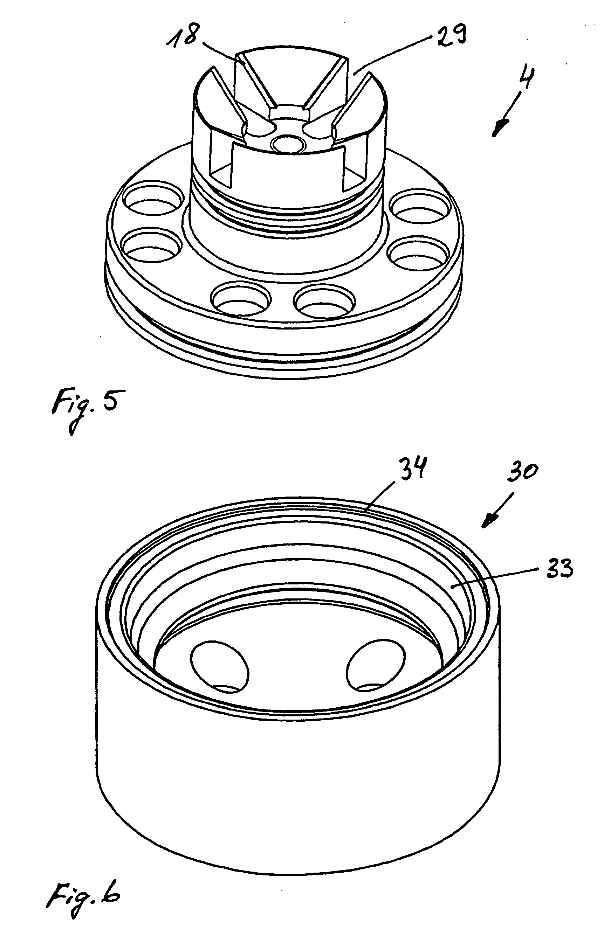

In Figur 1 ist eine Positionier- und Spannvorrichtung 1 geschnitten entlang der Z-Achse dargestellt. Die Z-Achse wird dabei in einem Koordinatensystem mit drei Achsen X, Y und Z als die senkrecht verlaufende Achse verstanden. Die Positionier- und Spannvorrichtung 1 besteht aus einem Grundkörper 2, der mit der Unterseite auf einer hier nicht abgebildeten Platte oder auf einem Arbeitstisch befestigt werden kann. Zur Positionier- und Spannvorrichtung 1 gehört einen dazu komplementär ausgebildeten Werkstück- oder Werkzeughalter 30, der in den Figuren 6 und 7 dargestellt ist. Der Grundkörper 2 hat eine im Wesentlichen rotationssymmetrische Form. Im Grundkörper 2 ist eine zylindrische Aufnahme 3 für einen Kolben 4 ausgebildet. Der Kolben 4 kann in der Richtung der Z-Achse bewegt werden. Für eine Bewegung des Kolbens 4 in der positiven Richtung der Z-Achse wird ein hydraulisches oder pneumatisches Medium verwendet. Für die Bewegung in der entgegen gesetzten Richtung dienen Federn 5 und/oder der Druck des hydraulischen oder pneumatischen Mediums. In der Platte sind Zufuhrleitungen für das hydraulische oder pneumatische Medium vorgesehen. Zur Abdichtung gegenüber der Platte weist der Grundkörper 2 an einer zylindrischen Aussenfläche 61 einen O-Ring 6 auf. Die Abdichtung zwischen dem Kolben 4 und dem Grundkörper 2 wird durch spezielle Dichtungen 7 mit einem X-förmigen Profil gewährleistet.

Von der unterhalb des Grundkörpers 2 angeordneten Platte oder vom Arbeitstisch her wird das hydraulische oder pneumatische Medium zum Grundkörper 2 und an die Unterseite des Kolbens 4 herangeführt. Im Grundkörper 2 verlaufen Leitungen, die eine offene Verbindung unter anderem zum Raum über dem Kolben 4 darstellen. Weiterhin sind Leitungen vorgesehen zu den Aufnahmen für die Federn 5 und zur zylindrischen Aufnahme 3 für die Spülluft, die notwendig ist für die Reinigung der Positionier- und Spannvorrichtung 1. Der Kolben 4 kann somit auch, anstelle von der Kraft der Federn 5 von dem Druck des hydraulischen oder pneumatischen Mediums in der entgegen gesetzten Richtung bewegt werden. Auch kann eine Kombination der Federkraft mit dem Mediumsdruck für den Positionier- und Spannvorgang angewendet werden.

Im Kolben 4 ist auf der Oberseite ein Zapfen 8 eingeschraubt. Der Zapfen 8 ist als eine Passschulterschraube mit genau definierten Abmessungen ausgebildet. Die Passschulterschraube 8 umfasst einen Gewindebereich 9, einen Schulterbereich 10 und einen Kopfbereich 11. Zwischen dem Kopfbereich 11 der Passschulterschraube 8 und dem Kolben 4 sind im Schulterbereich 10 unter einander eine ringförmige Druckscheibe 12 und ein Klemmkonus 13 angeordnet. Die Unterseite des Klemmkonus 13 und die Oberseite des Kolbens 4 verlaufen zu einander parallel und sind mit einem gleich bleibenden Abstand zu einander angeordnet. Die Druckscheibe 12 dient zur Verteilung der Kraft, die vom Klemmkonus 13 auf dem Kopfbereich 11 der Passschulterschraube 8 ausgeübt wird.

Im Grundkörper 2 sind etwa auf der gleichen Höhe wie der Klemmkonus 13 radial verlaufende Durchbrüche 14 ausgebildet. In diesen Durchbrüchen 14 sind Verriegelungsmittel 15 radial verschiebbar angeordnet. Die Verriegelungsmittel 15, der Klemmkonus 13 und der Kolben 4 weisen jeweils Steuerflächen 16, 17, 18 auf, die mit einander zusammenwirkend ausgebildet sind. Die Steuerflächen 16,17,18 sind beispielsweise ausgebildet als Flanken, Nuten oder Rippen, die alle unter dem gleichen Winkel von beispielsweise etwa 45° zur Z- Achse ausgebildet sind. Die Steuerflächen 16, 17, 18 sind zu einander parallel verlaufend angeordnet. Hiermit wird erreicht, dass die sich radial bewegenden Verriegelungsmittel 15 von der Bewegung des Kolbens 4 und des Klemmkonus 13 zwangsgeführt oder zwangsgesteuert werden. Durch die Bewegung des Kolbens 4 nach oben, entgegen der Kraft der Federn 5 werden die Verriegelungsmittel 15 radial nach innen bewegt. Umgekehrt werden durch die Bewegung des Kolbens 4 und des Klemmkonus 13 nach unten die Verriegelungsmittel 15 radial nach aussen bewegt. Der Klemmkonus 13 hat eine Zentralbohrung 32 mit einem Innendurchmesser, der deutlich grösser ist als der Aussendurchmesser des Schulterbereiches 10 der Passschulterschraube 8. Hierdurch wird der Klemmkonus 13 um die Z-Achse schwimmend in den Richtungen der X- und der Y-Achse gelagert. Hiermit werden Differenzen in den Bewegungen der einzelnen Verriegelungsmittel 15 ausgeglichen und eine definierte, gleichmässige Spannung des komplementären Werkstück- oder Werkzeughalters 30 erreicht.

Die Verriegelungsmittel 15 sind ausgebildet als Schieber oder Riegel mit einem rechteckigen und runden Querschnitt. Die Verriegelungsmittel 15 weisen am innerhalb des Grundkörpers 2 liegenden Ende einen Fuss 19 auf. Mit dem Fuss 19 wird erreicht, dass die Verriegelungsmittel 15 unverlierbar im Grundkörper 2 angeordnet sind. Am ausserhalb des Grundkörpers liegenden Ende weisen die Verriegelungsmittel 15 ein Profil 20 auf, das genau zum komplementär zum Grundkörper 2 gebildeten Werkstück- oder Werkzeughalter 30 ausgebildet ist.

Der Klemmkonus 13 weist oben, d.h. im Bereich mit dem grössten Konusdurchmesser, eine erste konische Fläche 31 auf, die unter einem Winkel von weniger als 10° zur Z-Achse verlaufend ausgebildet ist. Durch den steilen Winkel der konischen Fläche 31 wird erreicht, dass zwischen dem Verriegelungsmittel 15 und dem Klemmkonus 13 eine Selbsthemmung wirken kann, die auch bei Wegfall des Mediumsdruckes oder bei Abwesenheit der Federkraft eine sichere und feste Halterung aufrecht erhält.

Oben im Grundkörper 2 ist konzentrisch mit der Aufnahme 3 eine weitere zentrale Bohrung 21 ausgebildet. In der Bohrung 21 ist ein Deckel 22 unverlierbar angeordnet. Der Deckel 22 ist hierzu, wie in Figur 1 ersichtlich, mit einem Hutrand 24 ausgebildet. Anstelle des Hutrandes 24 kann der Deckel 22 im Randbereich mit einer Nut versehen sein, in der ein Spreng- oder Spreizring eingelegt wird, der sich nach dem Einführen durch die Bohrung 21 spreizt und ein wieder Ausführen durch die zentral Bohrung 21 verhindert. Der Deckel 22 überdeckt den Kopfbereich 11 der Passschulterschraube 8 und kann in der Richtung der Z-Achse auf und ab bewegt werden. Zwischen dem Kopf 11 und dem Deckel 22 ist eine Feder 23 angeordnet, die dafür sorgt, dass der Deckel 22 im nicht belasteten Zustand, d.h. ohne Kupplung an dem komplementäre Werkstück- oder Werkzeughalter, aus dem Grundkörper 2 nach aussen gedrückt wird. Durch die nach oben über dem Grundkörper 2 vorstehende Anordnung des Deckels 22 wird erreicht, dass der komplementäre Werkstück- oder Werkzeughalter 30 möglichst sanft an die Positionier- und Spannvorrichtung 1 herangeführt und wieder abgehoben werden kann. Im belasteten Zustand drückt der Kolben 4 den Deckel 22 nach oben bis die Oberkante des Deckels 22 bündig ist mit der Oberkante des Grundkörpers 2. Der Hutrand 24 oder der Spannring des Deckels 22 wird von einem Anschlag 25 des Grundkörpers 2 aufgefangen.

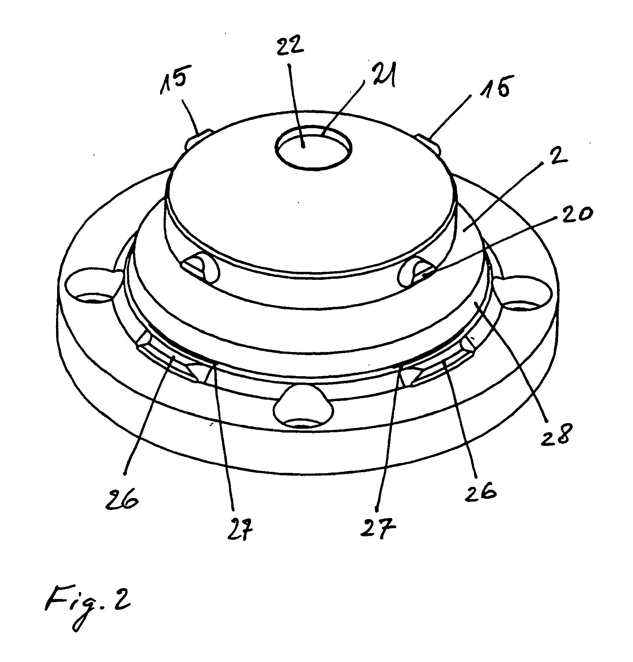

In Figur 2 ist die Positionier- und Spannvorrichtung 1 perspektivisch dargestellt. Hier ist ersichtlich, wie am Aussenumfang des Grundkörpers 2 vier Verriegelungsmittel 15 mit dem Profil 20 angeordnet sind. Weiter unten sind am Grundkörper 2 vier Z-Auflagen 26 ausgebildet. Direkt oberhalb jeder Z-Auflage 26 ist eine Ausblasöffnung 27 ausgebildet. Die Ausblasöffnung 27 ist leicht nach unten geneigt, d.h. gerichtet auf den Z-Auflagen 26 angeordnet und schlitzförmig ausgebildet. Durch den Ausblasschlitz 27 wird die Z-Auflage 26, beim Positionieren des komplementären Werkstück- oder Werkzeughalters 30, mit Druckluft sauber geblasen. Am Grundkörper 2 ist weiterhin eine konisch verlaufende Zentrierfläche 28 ausgebildet. Die Zentrierfläche 28 verlauft genau konzentrisch mit der zylindrischen Aussenfläche 61 des Grundkörpers 2. Durch die konzentrische Anordnung der Aussenfläche 61 und der Zentrierfläche 25 wird erreicht, dass die Positionier- und Spannvorrichtung 1 an einem genau definierten Platz auf der Platte oder auf dem Arbeitstisch befestigt und positioniert werden kann.

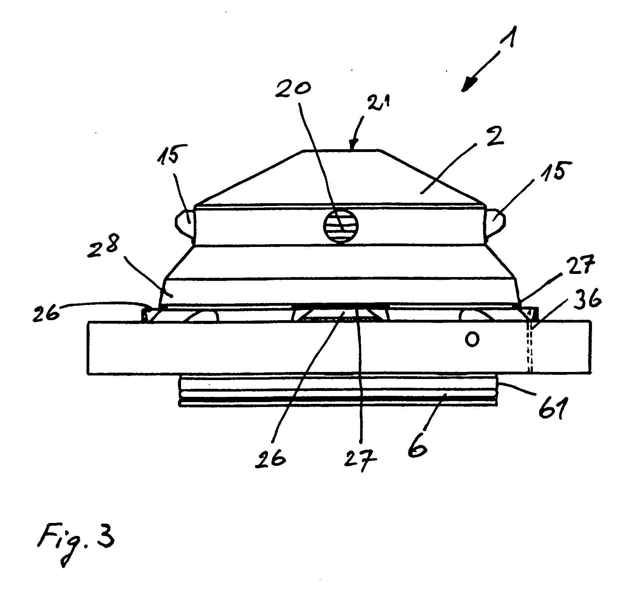

In Figur 3 ist die Positionier- und Spannvorrichtung 1 in einer seitlichen Ansicht dargestellt. Der Grundkörper 2 ist rotationssymmetrisch und genau passend zum komplementären Werkstück- oder Werkzeughalter 30, der in den Figuren 6 und 7 dargestellt ist, ausgebildet. In Figur 3 ist auch eine Anwesenheitskontrolle 36 angedeutet. In eine der Z-Auflagen 26 ist eine kleine Bohrung 36 ausgebildet, die mit dem hydraulischen oder pneumatischen Medium durchströmt wird, so lange sich kein Werkstück- oder Werkzeughalter 30 auf der Z-Auflage 26 befindet. Wenn die Bohrung 36 mit dem Werkstückhalter 30 zugedeckt wird, kann mittels eines Strömungs- oder ein Druckwächters festgestellt werden, dass kein Medium mehr strömt und dass das Werkstück richtig positioniert wurde.

In den Figuren 4a und 4b ist das Verriegelungsmittel 15 für sich alleine perspektivisch dargestellt. In Figur 5 ist der Kolben 4 für sich alleine perspektivisch dargestellt. Der Kolben 4 weist Durchbrüche 29 auf, in die das Verriegelungsmittel 15 in radialer Richtung nach innen oder nach aussen bewegt werden kann. Am Verriegelungsmittel 15 und am Kolben 4 sind die Steuerflächen 16, 18 ersichtlich. Weitere dazu passenden Steuerflächen 17 sind am Klemmkonus 4 ausgebildet. Mit den Steuerflächen 16, 17, 18 wird erreicht, dass die Verriegelungsmittel 15 in beiden Richtungen im Kolben 4 und im Grundkörper 2 zwangsgeführt werden können.

Zwischen dem Verriegelungsmittel 15 und dem Grundkörper 2, sowie zwischen dem Deckel 22 und dem Grundkörper 2 sind keine Dichtungen angeordnet, so dass hier die Spülluft austreten kann und die Aussenseite der Positionier- und Spannvorrichtung mit Druckluft bis zum Moment der Berührung des Grundkörpers 2 mit dem komplementären Werkstück- oder Werkzeughalter 30 gereinigt werden kann.

In den Figuren 6 und 7 sind zwei Varianten des komplementären Werkstück- oder Werkzeughalters 30 perspektivisch dargestellt. Für die Positionierung von grossen Werkstücken wird mehr als eine Positionier- und Spannvorrichtung 1 benötigt. Davon ist üblicherweise eine Vorrichtung zur so genannten Nullpunktzentrierung und eine zur Festlegung des Werkstückes in der X- oder Y-Richtung geeignet. Andere sind nicht zur Positionierung sondern nur zur Spannung oder Halterung ausgelegt. Der Werkstückhalter 30 aus Figur 6 weist eine Zentrierfläche 33 auf, die rundum durchgehend konisch ausgebildet ist. Der Durchmesser der konischen Zentrierfläche 33 ist genau angepasst an dem Durchmesser der Zentrierfläche 28 der Positionier- und Spannvorrichtung 1. Hiermit wird erreicht, dass eine spielfreie Positionierung mit minimaler Deformation der zu kuppelnden Vorrichtungen möglich wird. Die Durchmesser der konischen Zentrierflächen 28,33 wird so ausgelegt, dass lediglich eine Deformation im elastischen Bereich des Werkstoffes auftreten wird.

Der Werkstück- oder Werkzeughalter 30 weist am nach unten gerichteten Rand eine der Zentrierfläche 33 vor gelagerten Schutzrand 34 auf. Der Schutzrand 34 schützt die Zentrierfläche 33 vor Verschmutzung und Beschädigung. Der Werkstück- oder Werkzeughalter 30 aus Figur 7 weist zwei gegenüber einander angeordneten Zentrierflächen 35 auf. Der Werkstück- oder Werkzeughalter 30 aus Figur 7 ist somit nur für die Zentrierung in der Richtung der X- oder Y-Achse ausgelegt.

Mit der erfindungsgemässen Positionier- und Spannvorrichtung 1 wird ein Spannsystem angeboten, dass auch bei einer hohen Belastung eingesetzt werden kann. Weil die Zentrierflächen 28 des Grundkörpers 2 relativ gross sind, und weil die Verriegelungsmittel 15 ohne Kugeln arbeiten, wird die Spannkraft auf Flächen statt auf Punkten verteilt. Es wird eine präzise Positionierung erreicht, die auch nach längerer Lebensdauer noch reproduzierbar ist. Die Haltekraft der Verriegelungsmittel 15 kann ohne Gefahr der Beschädigung wesentlich grösser eingestellt werden als bei einer Vorrichtung mit Kugeln.

## Patentansprüche

1. Positionier- und Spannvorrichtung (1) für Werkzeuge und/oder Werkstücke umfassend einen Grundkörper (2), einen im Grundkörper (2) verschiebbar angeordneten Kolben (4), einen mit dem Kolben (4) verbindbar angeordneten Zapfen (8) und mindestens ein Verriegelungsmittel (15) zur Verriegelung der Positionier- und Spannvorrichtung gegenüber zum Grundkörper (2) komplementär ausgebildeten Werkstück- oder Werkzeughalter (30), wobei der Grundkörper (2) mit einer Zylinderaufnahme (3) zur Aufnahme des Kolbens (4) ausgebildet ist, wobei zwischen dem Kolben (4) und dem Zapfen (8) ein Klemmkonus (13) angeordnet ist, wobei an dem Klemmkonus (13) und an dem Kolben (4) Steuerflächen (17,18) ausgebildet sind, wobei am Verriegelungsmittel (15) weitere mit den Steuerflächen (17,18) des Klemmkonus (13) und des Kolbens (4) zusammenwirkende Steuerflächen (16) ausgebildet sind und wobei das Verriegelungsmittel (15) radial verschiebbar im Grundkörper (2) angeordnet ist, **dadurch gekennzeichnet, dass** der komplementär ausgebildete Werkstück- oder Werkzeughalter (30) aussen anliegend zum Grundkörper (2) angeordnet ist, dass das Verriegelungsmittel (15) als Schieber oder Riegel mit einem rechteckigen oder runden Querschnitt ausgebildet ist, dass das Verriegelungsmittel (15) in einem Durchbruch (14) des Grundkörpers (2) radial verschiebbar angeordnet ist und dass die Steuerflächen (16,17,18) zu einander parallel verlaufend angeordnet sind.

2. Positionier- und Spannvorrichtung (1) nach dem Anspruch 1, **dadurch gekennzeichnet, dass** die Steuerflächen (16) des Verriegelungsmittels (15) derart mit den Steuerflächen (17,18) des Kolbens (4) und des Klemmkonus (13) formschlüssig zusammen wirkend ausgebildet sind, dass eine Zwangssteuerung in radialer Richtung nach Aussen und nach Innen in Bezug auf die Z-Achse der Positionier- und Spannvorrichtung (1) erreicht wird.

3. Positionier- und Spannvorrichtung (1) nach einem der Ansprüche 1 oder 2, **dadurch gekennzeichnet, dass** der Zapfen (8) als Passschulterschraube (8) mit einem Kopfbereich (11), einem Schulterbereich (10) und einem Gewindebereich (9) ausgebildet ist.

4. Positionier- und Spannvorrichtung (1) nach einem der Ansprüche 1 bis 3, **dadurch gekennzeichnet, dass** der Klemmkonus (13) eine Zentralbohrung (32) mit einem grösseren Durchmesser als der Schulterbereich (10) der Passschulterschraube (8) aufweist.

5. Positionier- und Spannvorrichtung (1) nach einem der Ansprüche 1 bis 4, **dadurch gekennzeichnet, dass** der Klemmkonus (13) im Bereich des grössten Konusdurchmessers eine erste konische Fläche (31) aufweist, die unter einem Winkel von weniger als 10° zur Z-Achse verlaufend ausgebildet ist.

6. Positionier- und Spannvorrichtung (1) nach einem der Ansprüche 1 bis 5, **dadurch gekennzeichnet, dass** am Aussenumfang des Grundkörpers (2) Z-Auflagen (26) ausgebildet sind.

7. Positionier- und Spannvorrichtung (1) nach einem der Ansprüche 1 bis 6, **dadurch gekennzeichnet, dass** im Grundkörper (2) benachbart und parallel zur Z-Auflage (26) Ausblasöffnungen (27) angeordnet sind.

8. Positionier- und Spannvorrichtung (1) nach Anspruch 7, **dadurch gekennzeichnet, dass** die Ausblasöffnungen (27) leicht nach unten geneigt angeordnet und schlitzförmig ausgebildet sind.

9. Positionier- und Spannvorrichtung (1) nach einem der Ansprüche 1 bis 8, **dadurch gekennzeichnet, dass** der Grundkörper (2) auf der Aussenseite eine konisch ausgebildete Zentrierfläche (28) aufweist.

10. Positionier- und Spannvorrichtung (1) nach Anspruch 9, **dadurch gekennzeichnet, dass** die konisch ausgebildete Zentrierfläche (28) konzentrisch mit einer zylindrischen Aussenfläche (61) des Grundkörpers (2) ausgebildet ist.

11. Positionier- und Spannvorrichtung (1) nach einem der Ansprüche 1 bis 10, **dadurch gekennzeichnet, dass** im Grundkörper (2) eine zur Zylinderaufnahme (3) durchgehende zentrale Bohrung (21) ausgebildet ist.

12. Positionier- und Spannvorrichtung (1) nach Anspruch 11, **dadurch gekennzeichnet, dass** in der zentralen Bohrung (21) ein Deckel (22) in der Z-Richtung bewegbar und unverlierbar angeordnet ist.

13. Positionier- und Spannvorrichtung (1) nach einem der Ansprüche 3 bis 12, **dadurch gekennzeichnet, dass** zwischen dem Kopf (11) der Passschulterschraube (8) und dem Klemmkonus (13) eine ringförmige Druckscheibe (12) angeordnet ist.

14. Positionier- und Spannvorrichtung (1) nach einem der Ansprüche 1 bis 13, **dadurch gekennzeichnet, dass** der Deckel (22) zwischen der Druckscheibe (12) und einem Anschlag (25) des Grundkörpers (2) entgegen einer Federkraft in der Z-Richtung bewegbar angeordnet ist.

15. Positionier- und Spannvorrichtung (1) nach einem der Ansprüche 1 bis 14, **dadurch gekennzeichnet, dass** der komplementäre Werkstück- oder Werkzeughalter (30) eine Schutzrand (34) aufweist.

16. Positionier- und Spannvorrichtung (1) nach einem der Ansprüche 1 bis 15, **dadurch gekennzeichnet, dass** mindestens eine Z-Auflage (26) mit einer Bohrung (36) zwecks Anwesenheitskontrolle ausgebildet ist.

17. Positionier- und Spannvorrichtung (1) nach einem der Ansprüche 1 bis 16, **dadurch gekennzeichnet, dass** zur zylindrischen Aufnahme (3) im Grundkörper (2) Leitungen für die Spülluft ausgebildet sind.

## Claims

1. Positioning and clamping device (1) for tools and/or workpieces, comprising a basic body (2), a piston (4) displaceably arranged in the basic body (2), a pin (8) arranged such that it can be connected to the piston (4), and at least one locking means (15) for locking the positioning and clamping device relative to a work or tool holder (30) designed to be complementary to the basic body (2), the basic body (2) being formed with a cylindrical receptacle (3) for accommodating the piston (4), a clamping cone (13) being arranged between the piston (4) and the pin (8), control surfaces (17, 18) being formed on the clamping cone (13) and on the piston (4), further control surfaces (16) which interact with the control surfaces (17, 18) of the clamping cone (13) and of the piston (4) being formed on the locking means (15), and the locking means (15) being arranged in the basic body (2) in a radially displaceable manner, **characterized in that** the work or tool holder (30) of complementary design is arranged on the outside such as to bear against the basic body (2), **in that** the locking means (15) is designed as a slide or bolt having a rectangular or round cross section, **in that** the locking means (15) is arranged in an aperture (14) of the basic body (2) in a radially displaceable manner, and **in that** the control surfaces (16, 17, 18) are arranged to run parallel to one another.

2. Positioning and clamping device (1) according to Claim 1, **characterized in that** the control surfaces (16) of the locking means (15) are designed to interact in a positive-locking manner with the control surfaces (17, 18) of the piston (4) and of the clamping cone (13) in such a way that positive control outwards and inwards in the radial direction with respect to the Z axis of the positioning and clamping device (1) is achieved.

3. Positioning and clamping device (1) according to either of Claims 1 or 2, **characterized in that** the pin (8) is designed as a body-fit shoulder screw (8) having a head region (11), a shoulder region (10) and a threaded region (9).

4. Positioning and clamping device (1) according to one of Claims 1 to 3, **characterized in that** the clamping cone (13) has a central bore (32) having a larger diameter than the shoulder region (10) of the body-fit shoulder screw (8).

5. Positioning and clamping device (1) according to one of Claims 1 to 4, **characterized in that** the clamping cone (13) has in the region of the largest cone diameter a first conical surface (31) which is designed to run at an angle of less than 10° to the Z axis.

6. Positioning and clamping device (1) according to one of Claims 1 to 5, **characterized in that** Z seatings (26) are formed on the outer circumference of the basic body (2).

7. Positioning and clamping device (1) according to one of Claims 1 to 6, **characterized in that** blow-out openings (27) are arranged in the basic body (2) adjacent and parallel to the Z seating (26).

8. Positioning and clamping device (1) according to Claim 7, **characterized in that** the blow-out openings (27) are arranged such as to be inclined slightly downwards and are of slot-shaped design.

9. Positioning and clamping device (1) according to one of Claims 1 to 8, **characterized in that** the basic body (2) has a conical centring surface (28) on the outside.

10. Positioning and clamping device (1) according to Claim 9, **characterized in that** the conical centring surface (28) is formed concentrically to a cylindrical outer surface (61) of the basic body (2).

11. Positioning and clamping device (1) according to one of Claims 1 to 10, **characterized in that** a central bore (21) passing through to the cylindrical receptacle (3) is formed in the basic body (2).

12. Positioning and clamping device (1) according to Claim 11, **characterized in that** a cap (22) is arranged in a captive manner in the central bore (21) such as to be movable in the Z direction.

13. Positioning and clamping device (1) according to one of Claims 3 to 12, **characterized in that** an annular thrust washer (12) is arranged between the head (11) of the body-fit shoulder screw (8) and the clamping cone (13).

14. Positioning and clamping device (1) according to one of Claims 1 to 13, **characterized in that** the cap (22) is arranged between the thrust washer (12) and a stop (25) of the basic body (2) such as to be movable in the Z direction against a spring force.

15. Positioning and clamping device (1) according to one of Claims 1 to 14, **characterized in that** the complementary work or tool holder (30) has a protective edge (34).

16. Positioning and clamping device (1) according to one of Claims 1 to 15, **characterized in that** at least one Z seating (26) is formed with a bore (36) for the purpose of presence control.

17. Positioning and clamping device (1) according to one of Claims 1 to 16, **characterized in that** lines to the cylindrical receptacle (3) for the flushing air are formed in the basic body (2).

## Revendications

1. Dispositif de positionnement et de blocage (1) pour des outils et/ou des pièces à travailler, comprenant un corps de base (2), un piston coulissant (4) disposé dans le corps de base (2), un tenon (8) pouvant être relié au piston (4) et au moins un moyen de verrouillage (15) pour le verrouillage du dispositif de positionnement et de blocage par rapport à des porte-pièces ou des porte-outils (30) de forme complémentaire au corps de base (2), dans lequel le corps de base (2) est doté d'un logement cylindrique (3) destiné à recevoir le piston (4), dans lequel un cône de serrage (13) est disposé entre le piston (4) et le tenon (8), dans lequel des surfaces de commande (17, 18) sont formées sur le cône de serrage (13) et sur le piston (4), dans lequel d'autres surfaces de commande (16) coopérant avec les surfaces de commande (17, 18) du cône de serrage (13) et du piston (4) sont formées sur le moyen de verrouillage (15) et dans lequel le moyen de verrouillage (15) est disposé dans le corps de base (2) de façon à pouvoir coulisser radialement, **caractérisé en ce que** le porte-pièce ou le porte-outil (30) de forme complémentaire est disposé en application extérieure sur le corps de base (2), **en ce que** le moyen de verrouillage (15) est formé par un coulisseau ou un verrou ayant une section transversale rectangulaire ou ronde, **en ce que** le moyen de verrouillage (15) est disposé dans un passage (14) du corps de base (2) de façon à pouvoir coulisser radialement, et **en ce que** les surfaces de commande (16, 17, 18) sont disposées parallèlement l'une à l'autre.

2. Dispositif de positionnement et de blocage (1) selon la revendication 1, **caractérisé en ce que** les surfaces de commande (16) du moyen de verrouillage (15) sont réalisées de façon à coopérer en complémentarité de forme avec les surfaces de commande (17, 18) du piston (4) et du cône de serrage (13), de façon à obtenir une commande forcée en direction radiale vers l'extérieur et vers l'intérieur par rapport à l'axe Z du dispositif de positionnement et de blocage (1).

3. Dispositif de positionnement et de blocage (1) selon l'une quelconque des revendications 1 ou 2, **caractérisé en ce que** le tenon (8) est formé par une vis à épaulement d'ajustement (8) avec une zone de tête (11), une zone d'épaulement (10) et une zone filetée (9).

4. Dispositif de positionnement et de blocage (1) selon l'une quelconque des revendications 1 à 3, **caractérisé en ce que** le cône de serrage (13) présente un alésage central (32) dont le diamètre est plus grand que celui de la zone d'épaulement (10) de la vis à épaulement d'ajustement (8).

5. Dispositif de positionnement et de blocage (1) selon l'une quelconque des revendications 1 à 4, **caractérisé en ce que** le cône de serrage (13) comporte, dans la région du plus grand diamètre de cône, une première surface conique (31) qui forme un angle de moins de 10° par rapport à l'axe Z.

6. Dispositif de positionnement et de blocage (1) selon l'une quelconque des revendications 1 à 5,
**caractérisé en ce que** des appuis en Z (26) sont formés à la périphérie extérieure du corps de base (2).

7. Dispositif de positionnement et de blocage (1) selon l'une quelconque des revendications 1 à 6, **caractérisé en ce que** des ouvertures de soufflage (27) sont disposées dans le corps de base (2) à proximité et parallèlement à l'appui en Z (26).

8. Dispositif de positionnement et de blocage (1) selon la revendication 7, **caractérisé en ce que** les ouvertures de soufflage (27) sont légèrement inclinées vers le bas et sont en forme de fentes.

9. Dispositif de positionnement et de blocage (1) selon l'une quelconque des revendications 1 à 8, **caractérisé en ce que** le corps de base (2) présente une surface de centrage conique (28) sur son côté extérieur.

10. Dispositif de positionnement et de blocage (1) selon la revendication 9, **caractérisé en ce que** la surface de centrage conique (28) est concentrique à une surface extérieure cylindrique (61) du corps de base (2).

11. Dispositif de positionnement et de blocage (1) selon l'une quelconque des revendications 1 à 10, **caractérisé en ce qu'**un alésage central traversant (21) jusqu'au logement cylindrique (3) est formé dans le corps de base (2).

12. Dispositif de positionnement et de blocage (1) selon la revendication 11, **caractérisé en ce qu'**un couvercle (22) mobile dans la direction Z et imperdable est disposé dans l'alésage central (21).

13. Dispositif de positionnement et de blocage (1) selon l'une quelconque des revendications 3 à 12, **caractérisé en ce qu'**une rondelle de pression annulaire (12) est disposée entre la tête (11) de la vis à épaulement d'ajustement (8) et le cône de serrage (13).

14. Dispositif de positionnement et de blocage (1) selon l'une quelconque des revendications 1 à 13, **caractérisé en ce que** le couvercle (22) disposé entre la rondelle de pression (12) et une butée (25) du corps de base (2) est mobile dans la direction Z contre une force de ressort.

15. Dispositif de positionnement et de blocage (1) selon l'une quelconque des revendications 1 à 14, **caractérisé en ce que** le porte-pièce ou le porte-outil complémentaire (30) comporte un bord de protection (34).

16. Dispositif de positionnement et de blocage (1) selon l'une quelconque des revendications 1 à 15, **caractérisé en ce qu'**au moins un appui en Z (26) est muni d'un alésage (36) permettant un contrôle de présence.

17. Dispositif de positionnement et de blocage (1) selon l'une quelconque des revendications 1 à 16, **caractérisé en ce que** des conduits destinés à l'air de balayage sont formés dans le corps de base (2) vers le logement cylindrique (3).
